# EUROPEAN PATENT APPLICATION

(11) **EP 1 967 303 A1**
(43) Date of publication of application: **10.09.2008**
(21) Application number: 06835152.7
(22) Date of filing: 25.12.2006
(51) Int. Cl.: B23B 1/00, G05B 19/18, G05B 19/4093, G05B 19/416

(54) **MACHINE TOOL AND ITS PROGRAM CONVERSION METHOD**

(30) Priority: 28.12.2005 JP 2005377097
(71) Applicant: STAR MICRONICS CO., LTD., Suruga-ku, Shizuoka-shi, Shizuoka 422-8654 (JP)
(72) Inventor: YAZAKI, Noriyuki, Shizuoka-shi Shizuoka 422-8654 (JP); OZAWA, Satoru, Shizuoka-shi Shizuoka 422-8654 (JP); SUGIYAMA, Tetsuya, Shizuoka-shi Shizuoka 422-8654 (JP); TAKESHITA, Akihide, Shizuoka-shi Shizuoka 422-8654 (JP); KAJIYAMA, Takehisa, Shizuoka-shi Shizuoka 422-8654 (JP); YAGI, Hideyuki, Shizuoka-shi Shizuoka 422-8654 (JP)
(74) Representative: Skone James, Robert Edmund
(86) International application number: PCT/JP2006/325705
(87) International publication number: WO 2007/074748

(57) **Abstract**

In a machine tool which executes a plurality of programs simultaneously to perform machining, whether or not a precision machining operation period exists in each of the programs is analyzed before machining. If the precision machining operation period exists as a result of the analysis, the start timing and end timing of an ordered precision machining is recognized. Also, at least one of the speed, acceleration, and jerk of a general operation from start timing to end timing in a program for which the precision machining operation period is not specified is lowered. Accordingly, it is possible to provide a machine tool and its program conversion method, capable of performing precision machining with high precision without receiving an adverse effect from other operations, and capable of obtaining good machining efficiency.

## Description

### TECHNICAL FIELD

The present invention relates to a tool machine which is adapted to operate and control a plurality of mechanism sections simultaneously on the basis of an NC (Numerical Control) program, and a program conversion method which is adapted to convert the NC program into other machining programs, such an electronic cam.

### BACKGROUND ART

In the machine tool having these kinds of a plurality of mechanism sections, for example, when precision machining operation, such as cutting, is executed in one mechanism section, and if operation, such as tool replacement, is performed in the other mechanism sections, the impact of, particularly, acceleration and deceleration in the operation is transmitted to a mechanism which is executing precision machining, to thereby exert an adverse effect on the precision machining. As a result, there is a possibility that machining precision may fall, or tool marks may be formed in a workpiece. This possibility becomes high, though natural, as the running speed of the machine tool becomes high, and as the precision machining becomes high. For this reason, in a case where precision machining operation is executed in one mechanism section, the conventional machine tool is adapted such that operation, such as tool replacement, which affects the precision machining operation, is stopped in the other mechanism sections. However, in a case where only one mechanism section is operated in this way to perform the precision machining operation, another problem that the machining efficiency as the whole machine tool degrades occurs.

In order to cope with such a problem, for example, a machine tool having a configuration as disclosed in Patent Document 1 is also conventionally suggested. In this conventional configuration, when the precision machining is started in one mechanism section, and operation, such as tool replacement, is executed in the other mechanism sections, the start of the precision machining is delayed until the operation, such as tool replacement, ends. Also, the next operation in the other mechanism sections is changed to a low-speed operation, and the low-speed operation is started in the other mechanism sections simultaneously when the precision machining operation is started in one mechanism section.
Patent Document 1: Japanese Unexamined Patent Application Publication No. 2002-273601

### DISCLOSURE OF THE INVENTION

### PROBLEM TO BE SOLVED BY THE INVENTION

Meanwhile, in the conventional machine tool described in this Patent Document 1, as mentioned above, the precision machining operation is started in one mechanism section after waiting for the end of the operation in the other mechanism sections. Therefore, all the operations after the precision machining operation are delayed by the waiting time. Accordingly, there is a problem in that total machining time is extended, and degradation of the machining efficiency is still caused.

The invention has been made paying attention to a problem which exists in such a conventional technique. The object of the invention is to provide a machine tool and its program conversion method, capable of performing precision machining in one mechanism section with high precision without receiving an adverse effect from other mechanism sections, and capable of suppressing the possibility of causing any degradation in machining efficiency. Means for Solving the Problems

In order to achieve the above object, an invention defined in Claim 1 relating to a tool machine is a tool machine which converts a plurality of basic programs into machining programs, respectively, and simultaneously executes a plurality of machining programs so as to perform machining of a workpiece. The tool machine includes an analyzing means which analyzes whether or not data which commands precision machining operation exists in the basic programs, and a control means which controls the conversion operation of the machining programs so that the speed value of an operation other than the precision machining operation to be executed by other programs during the period of the precision machining operation may become lower than a normal speed value if the data exists.

Accordingly, in a case where the precision machining operation is executed in a mechanism section, a speed value, such as the acceleration of an operation other than the precision machining operation in other mechanism sections, is lowered. For this reason, it is possible to suppress that impact or vibration resulting from an operation other than the precision machining operation in other mechanism sections is transmitted to a mechanism section which is executing the precision machining operation, and it is possible to perform precision machining in the mechanism section with high precision. Further, during the precision machining in one mechanism section, operations other than the precision machining operation in other mechanism sections are not stopped or the start of the precision machining is not delayed. Therefore, any degradation in the machining efficiency as the whole machine tool can be suppressed. In addition, the normal speed value indicates the speed value of an operation by one machining program, in a case where a certain operation is executed by any one machining program, and in a case where there is no precision machining operation executed by other machining programs.

An invention defined in Claim 2 is the invention defined in Claim 1 in which the control means recognizes the start timing and end timing of the precision machining operation period in the basic programs, and determines the timing of the operation other than the precision machining operation for precision machining operation on the basis of the recognition.

Accordingly, lowering of the speed value of an operation other than precision machining operation can be realized with exact timing according to a precision machining operation period. An invention defined in Claim 3 is the invention defined in Claim 1 or 2 in which, at the time of lowering of the speed value of the operation other than the precision machining operation, the control means lowers the value of at least one of speed, acceleration, and jerk of the operation.

Accordingly, during the precision machining operation, the value of at least one of speed, acceleration, and jerk of an operation other than the precision machining operation in other mechanism sections is suppressed so as to be below a predetermined value. Therefore, it is possible to suppress that impact of an operation other than the precision machining operation in other mechanism sections is transmitted to a mechanism section which is executing the precision machining, and it is possible to perform precision machining in the mechanism section with high precision without receiving an adverse effect from other mechanism sections.

An invention defined in Claim 4 is the invention defined in any one of Claims 1 to 3 in which the analyzing means analyzes whether or not the data which commands the precision machining operation exists in the basic programs before the start of the machining.

Accordingly, a machining program can be created on the basis of the result interpreted before machining, and high-precision machining can be realized at high efficiency on the basis of the machining program. An invention defined in Claim 5 is the invention defined in any one of Claims 1 to 4, further including a determining means which determines whether or not there is the data of the operation other than the precision machining operation. The control means controls the lowering of the speed value if the determining means determines not to be machining operation.

Accordingly, if the determining means determines not to be machining operation, the control means controls lowering of the speed value. For this reason, the influence caused by the operation, such as tool replacement, which is high in the possibility of exerting an adverse effect on precision machining, can be effectively eliminated.

An invention defined in Claim 6 relating to a program conversion method of a tool machine is a program conversion method of a machine tool which converts a plurality of basic programs into machining programs, respectively. The method includes the steps of: analyzing whether or not a precision machining operation period exists in each of the basic programs, and converting the basic program into a machining program so that the speed value of an operation other than the precision machining operation to be executed in other basic programs during the precision machining operation period may become lower than a normal speed value if the precision machining operation period exists.

An invention defined in Claim 7 is the invention defined in Claim 6, which recognizes the start timing and end timing of the precision machining operation period in the basic programs, and determines the timing of the operation other than the precision machining operation for precision machining operation on the basis of the recognition.

Accordingly, similarly to Claim 2, lowering of the speed value of an operation other than precision machining operation can be realized with exact timing according to a precision machining operation period. Effects of the Invention

As described above, according to the invention, it is possible to perform precision machining in one mechanism section with high precision without receiving an adverse effect from other mechanism sections, and to suppress the possibility of causing any degradation in machining efficiency, thereby achieving both high-precision machining and high-efficiency machining.

### BEST MODE FOR CARRYING OUT THE INVENTION

### (First Embodiment)

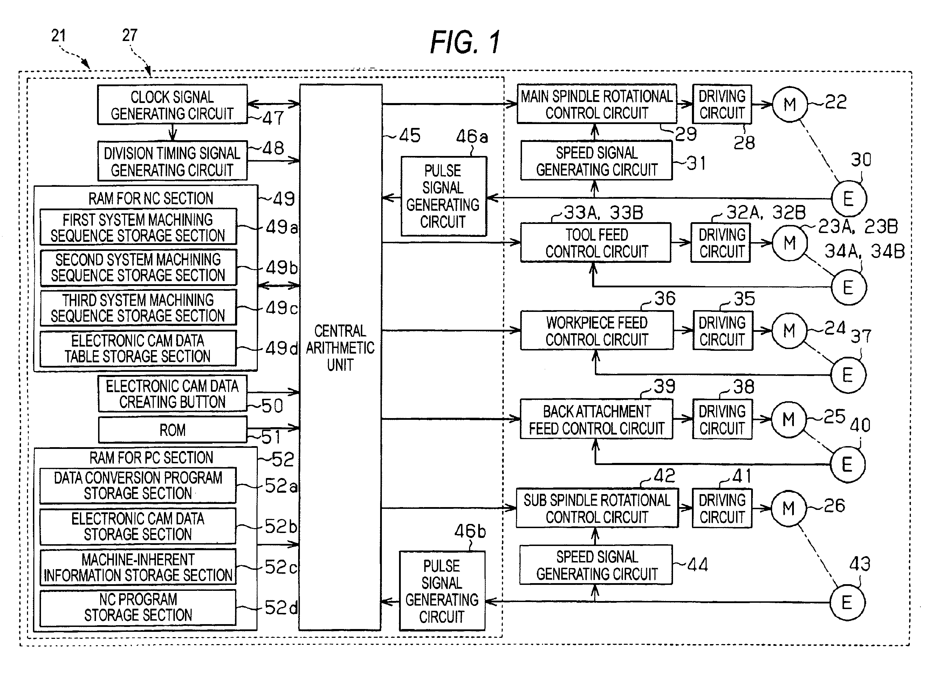

Hereinafter, a first embodiment of the invention will be explained with reference to Figs. 1 to 9. As shown in Fig. 1, a machine tool 21 of this embodiment includes a control unit section 27. Driving of each of a main spindle rotating motor 22, tool moving motors 23A and 23B, a workpiece moving motor 24, a back attachment moving motor 25, a sub spindle rotating motor 26 is controlled by the control unit section 27.

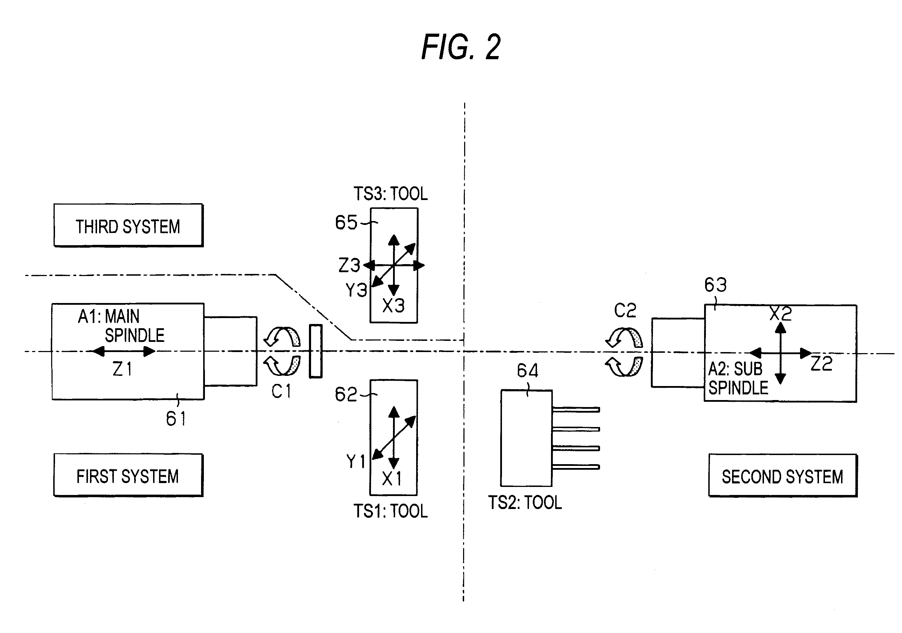

The main spindle rotating motor 22 is connected to the control unit section 27 via a driving circuit 28 and a main spindle rotational control circuit 29. A main spindle A1 shown in the Fig. 2 for detachably holding a workpiece is rotationally driven by the main spindle rotating motor 22. Further, the main spindle rotating motor 22 is provided with a pulse encoder 30 for detecting the rotation of the motor 22. The pulse encoder 30 generates a rotation detection signal in synchronization with the rotation of the main spindle rotating motor 22, to output the signal to the control unit section 27 and a speed signal generating circuit 31. The speed signal generating circuit 31 converts the rotation detection signal output from the pulse encoder 30 into a main spindle rotational speed signal equivalent to the rotational speed of the main spindle rotating motor 22, to output the signal to the main spindle rotational control circuit 29.

The main spindle rotational control circuit 29 is a circuit for controlling the rotation of a workpiece on the main spindle so as to become a desired rotational speed, on the basis of a clock signal output from a clock signal generating circuit 47 of the control unit section 27 as will be explained later. That is, the main spindle rotational control circuit 29 compares a main spindle rotational speed command signal output from the control unit section 27 with the main spindle rotational speed signal output from the speed signal generating circuit 31, to generate a control signal according to the difference therebetween, on the basis of the clock signal. Then, the control signal generated in the main spindle rotational control circuit 29 is output to the driving circuit 28.

The driving circuit 28 controls the supply power to the main spindle rotating motor 22 so that the rotational speed of the main spindle rotating motor 22, i.e., the rotational speed of the main spindle coincides with a main spindle rotational speed command value as will be explained later, on the basis of the control signal output from the main spindle rotational control circuit 29. Also, a feedback control system over the rotational speed of the main spindle rotating motor 22 (main spindle) is constituted by the driving circuit 28, the main spindle rotational control circuit 29, and the speed signal generating circuit 31.

The tool moving motor 23A is connected to the control unit section 27 via a driving circuit 32A and a tool feed control circuit 33A. A tool TS1 (turning tool, etc.) shown in the Fig. 2 for machining a workpiece is moved, for example, in a direction (X-axis direction or Y-axis direction indicated by X1 or Y1 in Fig. 2) orthogonal to the rotation center axis of the main spindle rotating motor 22, i.e., the main spindle, by the tool moving motor 23A. Further, the tool moving motor 23A is provided with a pulse encoder 34A for detecting the rotation of the motor 23A. The pulse encoder 34A generates a rotation detection signal at every predetermined rotation angle of the tool moving motor 23A, to output the signal to the tool feed control circuit 33A.

The tool moving motor 23B is connected to the control unit section 27 via a driving circuit 32B and a tool feed control circuit 33B. A tool TS3 (turning tool, etc.) shown in the Fig. 2 for machining a workpiece is moved, for example, in a direction (X-axis direction or Y-axis direction indicated by X3 or Y3 in Fig. 2) orthogonal to the rotation center axis of the main spindle rotating motor 22, i.e., the main spindle, or in a direction (Z-axis direction indicated by Z3 in Fig. 2) parallel to the main spindle, by the tool moving motor 23B. Further, the tool moving motor 23B is provided with a pulse encoder 34B for detecting the rotation of the motor 23B. The pulse encoder 34B generates a rotation detection signal at every predetermined rotation angle of the tool moving motor 23B, to output the signal to the tool feed control circuit 33B.

In addition, in Fig. 1, in order to avoid complexity of the drawing, the tool moving motors 23A and 23B, and their relating members 32A and 32B, etc. are drawn as common blocks, but they are shown as different blocks in practice.

The tool feed control circuits 33A and 33B recognize the movement position of an actual tool on the basis of rotation detection signals output from the pulse encoders 34A and 34B, and compare the recognized movement position of the actual tool with a tool position command signal output from the control unit section 27 as will be explained later, to generate a tool driving signal on the basis of the comparison result. Then, the tool driving signals generated in the tool feed control circuits 33A and 33B are output to the driving circuits 32A and 32B. The driving circuits 32A and 32B control the supply power to the tool moving motors 23A and 23B on the basis of the tool driving signals output from the tool feed control circuits 33A and 33B. Also, a feedback control system over the movement position of a tool is constituted by the driving circuits 32A and 32B and the tool feed control circuits 33A and 33B.

The workpiece moving motor 24 is connected to the control unit section 27 via a driving circuit 35 and a workpiece feed control circuit 36. A workpiece is moved, for example in a direction parallel (Z-axis direction indicated by Z1 in Fig. 2) to the rotation center axis of the main spindle rotating motor 22, i.e., the rotation center axis of the main spindle by the workpiece moving motor 24. Further, the workpiece moving motor 24 is provided with a pulse encoder 37 for detecting the rotation of the motor 24. The pulse encoder 37 generates a rotation detection signal at every predetermined rotation angle of the workpiece moving motor 24, to output the signal to the workpiece feed control circuit 36.

The workpiece feed control circuit 36 recognizes the movement position of an actual workpiece on the basis of a rotation detection signal output from the pulse encoder 37, and compare the recognized movement position of the actual workpiece with a workpiece position command signal output from the control unit section 27, to generate a workpiece driving signal on the basis of the comparison result. Then, the workpiece driving signal generated in the workpiece feed control circuit 36 is output to the driving circuit 35. The driving circuit 35 controls the supply power to the workpiece moving motor 24 on the basis of the workpiece driving signal output from the workpiece feed control circuit 36. Also, a feedback control system over the movement position of a workpiece is constituted by the driving circuit 35 and the workpiece feed control circuit 36.

The back attachment moving motor 25 is connected to the control unit section 27 via a driving circuit 38 and a back attachment feed control circuit 39. A back attachment which supports a sub spindle A2 shown in Fig. 2, the back spring rotating motor 26, etc. is moved, for example, in a direction (Z-axis direction indicated by Z2 in Fig. 2) parallel to the rotation center axis of the main spindle rotating motor 22, i.e., the rotation center axis of the sub spindle, or in a direction (X-axis direction indicated by X2 in Fig. 2) orthogonal thereto, by the back attachment moving motor 25. Further, the back attachment moving motor 25 is provided with a pulse encoder 40 for detecting the rotation of the motor 25. The pulse encoder 40 generates a rotation detection signal at every predetermined rotation angle of the back attachment moving motor 25, to output the signal to the back attachment feed control circuit 39.

The back attachment feed control circuit 39 recognizes the movement position of an actual back attachment on the basis of a rotation detection signal output from the pulse encoder 40, and compare the recognized movement position of the actual back attachment with a back attachment position command signal output from the control unit section 27, to generate a back attachment driving signal on the basis of the comparison result. Then, the back attachment driving signal generated in the back attachment feed control circuit 39 is output to the driving circuit 38. The driving circuit 38 controls the supply power to the back attachment moving motor 25 on the basis of the back attachment driving signal output from the back attachment feed control circuit 39. Also, a feedback control system over the movement position of a back attachment is constituted by the driving circuit 38 and the back attachment feed control circuit 39.

The sub spindle rotating motor 26 is connected to the control unit section 27 via a driving circuit 41 and a sub spindle rotational control circuit 42. The sub spindle (A2 shown in the Fig. 2) for detachably holding a workpiece is rotationally driven by the sub spindle rotating motor 26. Further, the sub spindle rotating motor 26 is provided with a pulse encoder 43 for detecting the rotation of the motor 26. The pulse encoder 43 generates a rotation detection signal in synchronization with the rotation of the sub spindle rotating motor 26, i.e., the rotation of the sub spindle, to output the signal to the control unit section 27 and a speed signal generating circuit 44. The speed signal generating circuit 44 converts the rotation detection signal output from the pulse encoder 43 into a sub spindle rotational speed signal equivalent to the rotational speed of the sub spindle rotating motor 26, to output the signal to the sub spindle rotational control circuit 42.

The sub spindle rotational control circuit 42 is a circuit for controlling the rotation of the sub spindle rotating motor 26, i.e., the rotation of the sub spindle holding a workpiece so as to become a desired rotational speed, on the basis of a clock signal output from a clock signal generating circuit 47 as will be explained later. That is, the sub spindle rotational control circuit 42 compares a sub spindle rotational speed command signal output from the control unit section 27 with the sub spindle rotational speed signal output from the speed signal generating circuit 44, to generate a control signal according to the difference therebetween, on the basis of the clock signal. Then, the control signal generated in the sub spindle rotational control circuit 42 is output to the driving circuit 41.

The driving circuit 41 controls the supply power to the sub spindle rotating motor 26 so that the rotational speed of the sub spindle rotating motor 26 coincides with a sub spindle rotational speed command value as will be explained later, on the basis of the control signal output from the sub spindle rotational control circuit 42. Also, a feedback control system over the rotational speed of the sub spindle rotating motor 26, i.e., the rotational speed of the sub spindle, is constituted by the driving circuit 41, the sub spindle rotational control circuit 42, and the speed signal generating circuit 44.

Meanwhile, the control unit section 27 includes a central arithmetic unit 45, pulse signal generating circuits 46a and 46b, a clock signal generating circuit 47, a division timing signal generating circuit 48, a RAM (Random Access Memory) 49 for an NC section, an electronic cam data creating button 50, a ROM (Read-Only Memory) 51, and a RAM 52 for a PC section.

The central arithmetic unit 45 is an arithmetic section which is in charge of the signal processing, etc. of the whole control unit section 27, and performs well-known multi-processing, i.e., multi-processing. Here, the multi-processing indicates that a plurality of programs are stored, and these programs are executed while being switched in a short time so that a plurality of programs may be processed seemingly simultaneously. In this case, time division processing is executed, or task processing is executed while priority is given to each of the programs, and processing is switched in the order of a higher priority.

The pulse signal generating circuits 46a and 46b are respectively connected to the pulse encoders 30 and 43, and are connected to the central arithmetic unit 45. Also, the pulse signal generating circuits 46a and 46b respectively input the rotation detection signals output from pulse encoders 30 and 43 via interfaces, etc., and generate pulse signals at every predetermined rotation angle on the basis of the rotation detection signals, to output them to the central arithmetic unit 45. In this embodiment, the pulse signal generating circuits 46a and 46b output a predetermined number of pulse signals at equal intervals in synchronization with the main spindle rotating motor 22 and the sub spindle rotating motor 26, while the main spindle rotating motor 22 or the sub spindle rotating motor 26 makes one rotation.

The clock signal generating circuit 47 receives a predetermined command signal output from the central arithmetic unit 45, generates a clock signal in a predetermined cycle, for example, a cycle of 0.25 milliseconds, and outputs the signal to the division timing signal generating circuit 48. The division timing signal generating circuit 48 counts the occurrence frequency of clock signals output from the clock signal generating circuit 47, and generates a division timing signal whenever, for example, one millisecond has passed on the basis of the counted result, to output the signal to the central arithmetic unit 45. Accordingly, the division timing signal generating circuit 48 outputs a division timing signal in a cycle of one millisecond to the central arithmetic unit 45 as an interruption timing signal as will be explained later. In addition, the cycles of clock signals and division timing signals can be suitably set in consideration of the processing capability of the central arithmetic unit 45, the resolution of the pulse encoders 30, 34, 37, 40, and 43, the performance of each of the motors 22 to 26, etc., without being limited to the numerical values mentioned above.

The RAM 49 for an NC section is configured so as to temporarily store the results of various operations in the central arithmetic unit 45 in a readable way. The RAM 49 for an NC section stores various kinds of programs including an NC program for making the machine tool 21 perform actual machining operation. That is, the RAM 49 for an NC section is provided with a first system machining sequence storage section 49a, a second system machining sequence storage section 49b, and a third system machining sequence storage section 49c which store NC programs corresponding to first to third systems, respectively, and an electronic cam data table storage section 49d that store a machining program as will be explained later.

In addition, data tables stored in the electronic cam data table storage section 49d are provided to perform socalled electronic cam control. The electronic cam control means that general operation data on a movement axis at every moment is generated from rotation positional data at every moment by pulse signals output by a pulse encoder attached to a reference axis, such as a main spindle, and command positional data on a movement axis corresponding to every unit rotation position of the reference axis. Also, command speed data on the movement axis synchronized with the rotational speed of a rotating object is generated from the general operation data and rotation positional data so that the position of a tool may be controlled on the basis of the command speed data and the general operation data.

Next, mechanism sections which are operated on the basis of the NC programs stored in the first system machining sequence storage section 49a, the second system machining sequence storage section 49b, and the third system machining sequence storage section 49c for the RAM 49 for an NC section will be explained with reference to Figs. 1 and 2. That is, as can be understood from the following description, a machining program for every system is created from the NC program for each of the first to third programs, and each system is operated by this machining program.

First, the operation of the main spindle rotating motor 22, the tool moving motors 23A and 23B, and the workpiece moving motor 24 in a mechanism section of a first system is controlled by a machining program serving as electronic cam data based on the NC program stored in the first system machining sequence storage section 49a. Thereby, as indicated by an arrow in Fig. 2, the main spindle A1 on the headstock 61 is controlled to move in a Z1-axis direction together with the headstock 61, and is controlled to rotate in the rotational direction of C1. Meanwhile, the tool TS1 on a tool rest 62 is controlled to move in the X1-axis and Y1-axis directions as indicated by arrows in the drawing, together with the tool rest 62.

That is, in the first system, the movement control of the headstock 61, the rotational control of main spindle A1, and the movement control of the tool rest 62, which supports tool TS1, in each arrow direction, are performed. Meanwhile, the tool TS1 is installed in the tool rest 62, so that an immovable fixed thing, such as a turning tool, or a rotatable thing, such as a drill, can be attached thereto. In this case, in a case where the rotatable thing, such as a drill, its rotation is controlled by the machining program based on the NC program stored in the first system machining sequence storage section 49a.

First, the rotation of the back attachment moving motor 25, the sub spindle rotating motor 26, and a tool TS2 in a mechanism section of a second system is controlled by a machining program based on the NC program stored in the second system machining sequence storage section 49b. Thereby, as indicated by an arrow in Fig. 2, the sub spindle A2 is controlled to move in the X2-axis and Z2-axis directions together with a back attachment 63, and is controlled to rotate in the rotational direction of C2. Meanwhile, the tool TS2 is installed in a fixed tool rest 64, so that an immovable fixed thing, such as a turning tool, or a rotatable thing, such as a drill, can be attached thereto, similarly to the tool TS1. In this case, in a case where the rotatable thing, such as a drill, its rotation is controlled by the machining program based on the NC program stored in the second system machining sequence storage section 49b.

Moreover, the tool moving motors 23A and 23B are controlled from the machining program based on the NC program stored in the third system machining sequence storage section 49c. Thereby, the tool TS3 of a third system is controlled to move in the X3-axis, Y3-axis, and Z3-axis directions as indicated by arrows in Fig. 2, together with a tool rest 65. That is, in a mechanism section of the third system, the tool rest 65 which supports the tool TS3 is controlled to move, and in a case where the tool TS3 held in the tool rest 65 is a rotary tool, such as a drill, the rotation of the tool is controlled.

In addition, in this embodiment, as mentioned above, the tool TS1 is allocated to the first system, the tool TS2 is allocated to the first system, and the tool TS3 is allocated to the third system. However, the tool TS1 or the tool TS3 may be controlled by any arbitrary system, and the system allocation of the tool can be suitably changed if needed. Similarly, the system allocation of the main spindle A1 and the sub spindle A2 can also be arbitrarily changed if needed.

The electronic cam data table storage section 49d of the RAM 49 for an NC section stores a plurality of electronic cam data tables to which identification numbers are given. The respective electronic cam data tables are provided to store the positional data of a workpiece which is set in correspondence with every specific cumulative rotational frequency or position of a predetermined axis , such as the main spindle rotating motor 22 (main spindle), and the positional data of a tool. The respective electronic cam data tables are called by the first and third system machining sequence storage sections 49a to 49c, to control the operation of the mechanism section of each system. In addition, the aforementioned predetermined cumulative rotational frequency requires a large storage capacity, it may be stored in correspondence with every specific angle of rotational frequency or position (every cumulative angle of rotation) of a predetermined axis, such as the main spindle rotating motor 22.

The electronic cam data creating button 50 shown in Fig. 1 is provided on a control panel of the machine tool which is not shown, and is operated for starting when an updated program file for machine operation for operating the machine tool is created.

The ROM 51 is a storage section which stores various machining programs. Also, an operation program for settling the movement position of a workpiece and the movement position of a tool at every predetermined time interval (for example, every one millisecond), for example, when threading is performed, or an operation program for settling the movement position of a workpiece or a tool at every predetermined angle of the rotation of the main spindle rotating motor 22 when drilling, cutting, etc. is performed is stored in the ROM 51.

Further, the central arithmetic unit 45 counts the occurrence frequency of pulse signals output from the pulse signal generating circuits 46a and 46b on the basis of the programs stored in the ROM 51, and calculates the cumulative rotational frequency or cumulative rotational angle of the main spindle rotating motor 22 (main spindle) on the basis of the counted result.

The RAM 52 for a PC section is configured so as to temporarily store the results of various operations in the central arithmetic unit 45 in a readable way. The RAM 52 for a PC section is constituted by a storage section of a personal computer (not shown) connected to the central arithmetic unit 45. Also, all data to be referred to when an NC program created by a programming tool or manpower is converted or changed are stored in the RAM 52 for a PC section.

That is, a data conversion program storage section 52a, an electronic cam data storage table 52b, a machine-inherent information storage section 52c, and an NC program storage section 52d are provided in a portion of the RAM 52 for a PC section. In addition, an NC program file stored in the NC program storage section 52d is created in advance by a programming tool or manpower. The NC program file created in this manner is loaded prior to machining of parts, via a storage medium reader, which is provided in a numerical control unit prepared for the programming tool, using a function of communication with the numerical control unit, or using media, such as a flexible disk or a compact disk.

A data conversion program is stored in the data conversion program storage section 52a. The data which is obtained when an NC program as a basic program is converted into electronic cam data as a machining program by executing a data conversion program is stored in the electronic cam data storage table 52b. The data to be referred to when a data conversion program is executed, such as time and operating conditions required for the execution of commands described in an NC program, is stored in the machine inherent information storage section 52c. An NC program to be used as a processing target of a data conversion program is stored in the NC program storage section 52d.

Also, in this embodiment, the control unit section 27 including the central arithmetic unit 45 constitutes an analyzing means for analyzing whether or not a precision machining operation period exists in each NC program, at the time of the conversion of a plurality of NC programs based on the operation of the electronic cam data creating button 50, i.e., at the time of the creation of a machining program which is an operation program of each system.

Further, the control unit section 27 constitutes a recognizing means which measures the start timing and end timing of ordered precision machining in every NC program in a case where a precision machining operation period exists in the above analysis. Moreover, the control unit section 27 constitutes a control means for suppressing and controlling to below a predetermined value at least one of the speed, acceleration, and jerk of an operation from the start timing to the end timing in an NC program for which a precision machining operation period is not specified.

In addition, the control unit section 27 constitutes a determining means which determines whether or not the operation in an NC program to which a precision machining operation period is not designated is machining operation. Also, the control unit section 27 executes the suppression control if it is determined that the operation is not machining operation, and does not execute the suppression operation but executes a designated operation if it is determined that the operation is machining operation.

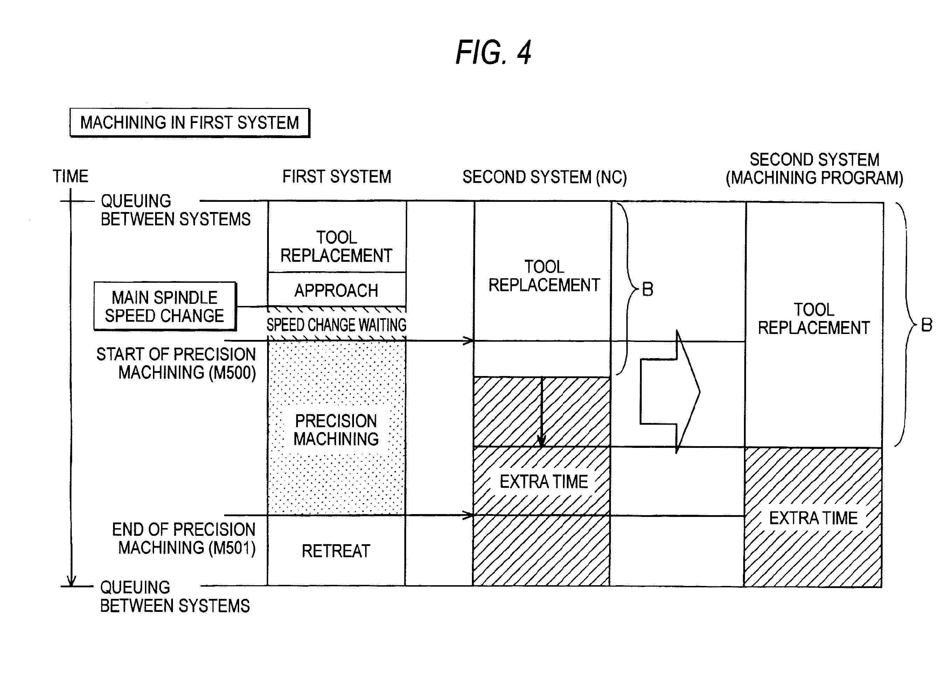

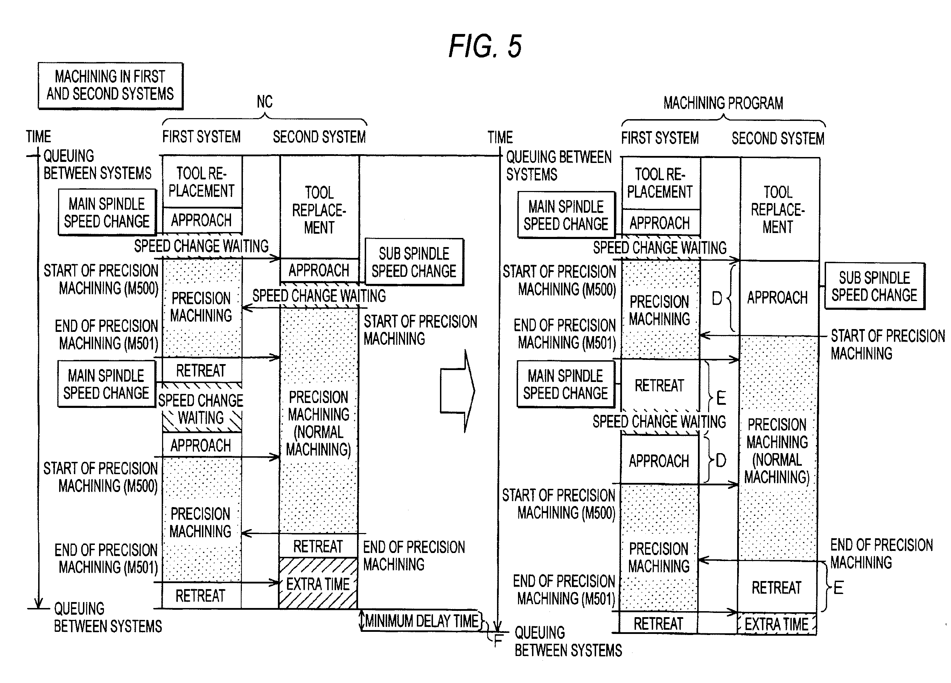

Next, the operation of creating a machining program, i.e., electronic cam data in the machine tool configured as mentioned above, will be explained. First, the NC program as a basic program is a program for operating a machine tool as shown in Figs. 4 and 5. In addition, the operation shown in each of Fig. 4 and Fig. 5 is one which is shown as an example among various operation modes included in an NC program.

Fig. 4 shows a time chart of an NC program of the first system, a time chart of an NC program of the second system, and a machining program (electronic cam data) which is obtained by converting the NC program of the second system, in a case where machining is performed in the headstock 61 of the first system, and tool replacement operation is performed in the second system. In addition, since the time chart of the machining program based on the NC program in the first system appears in a form similar to the NC program, it is not shown.

Now, in the first system, after tool replacement is executed, the tool rest 62 is operated to approach a workpiece at high speed. Subsequently, the main spindle A1 is operated to make a speed change so as to have a set rotational speed suitable for precision machining (a period in which switching to the setting rotational speed is made is shown as a period of "speed change waiting"). Then, precision machining of the workpiece is executed, and retreat operation of the tool rest 62 is performed with the end of the precision machining. Meanwhile, in the second system, separate tool replacement operation is started simultaneously with the start of the tool replacement operation of the first system, and the tool replacement operation of the second system ends during the precision machining operation of the first system. For this reason, at least one speed value of the speed, acceleration, and jerk of the tool replacement operation of the second system is controlled in a machining program so as to become lower than a normal speed value so that an adverse effect on the precision machining of the first system by any vibration or impact accompanying the end of the tool replacement operation of the second system may be suppressed. For this reason, in the machining program, consequently, a tool replacement period B is extended.

Fig. 5 shows a time chart of an NC program, and a time chart of a machining program (electronic cam data) which is obtained by converting the NC program, in a case where machining is performed in the headstock 61 of the first system, and tool replacement operation is performed in the back attachment 63 of the second system.

Now, in the NC program of the first system, after tool replacement is executed, the tool rest 62 is operated to approach a workpiece at high speed. Next, the main spindle A1 is operated to make a speed change so as to have a predetermined rotational speed suitable for precision machining. Then, first precision machining of the workpiece is executed, and retreat operation of the tool rest 62 is performed with the end of the precision machining. Further, after the main spindle A1 is operated to make a speed change so as to have a predetermined rotational speed suitable for second precision machining, the tool rest 62 is operated to approach the workpiece at high speed. Then, second precision machining of the workpiece is executed, and retreat operation of the tool rest 62 is performed with the end of the precision machining.

Meanwhile, in the second system, tool replacement operation is started simultaneously with the start of the tool replacement operation of the first system, Next, after high-speed approach operation of the tool rest 64 is executed, the sub spindle A2 is operated to make a speed change so as to have a predetermined rotational speed suitable for precision machining. Subsequently, precision machining operation is started, and retreat operation of the tool rest 64 is performed with the end of the machining operation.

Here, the start timing of the precision machining operation of the second system is during a first precision machining period of the first system, and the end timing of the precision machining of the second system is during a second precision machining period of the first system. Further, the first precision machining end timing and the second precision machining start timing of the first system are during a precision machining period of the second system. For this reason, at least one speed value of the speed, acceleration, and jerk of the operation in an approach operation period D and a retreat operation period E corresponding to a precision machining period of other systems is controlled in a machining program so as to become lower than a normal speed value so that an adverse effect on the precision machining of each of the first and second systems is not exerted from the other systems. For this reason, in the machining program, consequently, an approach operation period D and a retreat operation period E are extended, and the speed change operation between the extended approach operation and retreat operation, and the main spindle A1, and the sub spindle A2 is executed simultaneously.

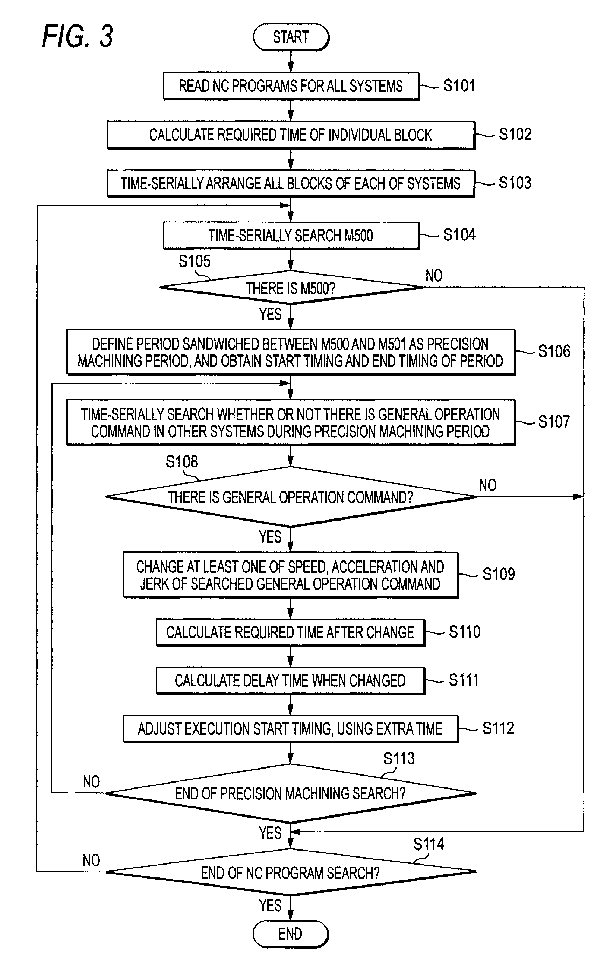

Now, in the machine tool 21, in a case where the aforementioned NC program as a basic program is changed to a machining program as electronic cam data prior to machining of a workpiece, the electronic cam data creating button 50 on the control panel is operated. In this way, a data conversion program stored in the data conversion program storage section 52a is run under the control of the control unit section 27, and the operations of individual steps (hereinafter simply referred to as "S") 101 to 114 shown in a flow chart of Fig. 3 are executed in order.

That is, in S101, an NC program is read from the individual machining sequence storage sections 49a to 49c of the RAM 49 for an NC section, or from an external storage medium which is not shown, and is stored in the NC program storage section 52d for the RAM 52 for a PC. Then, data of an individual block of the tool replacement, approach operation, precision machining, etc. of a plurality of NC programs which operate the first to third systems, respectively, is read from the NC program storage section 52d, and is analyzed in the next S102. In S102, as for the read individual block of each of the NC programs, the time required for the operation of the block is calculated. Moreover, in S103, as shown in Figs. 4 and 5, the data of an individual block is time-serially arranged in each of the first to third systems, and is temporarily written in a working region of the RAM 52 for a PC section which is not shown so that the end timing of the previous block may become the start timing of the next block.

Subsequently, in S104, the existence/non-existence of a precision machining start command (in this embodiment, the command is denoted by a code "M500" shown in Figs. 4 and 5) is searched out of the NC programs time-serially arranged as mentioned above. On the basis of the search, in the next S105, it is determined whether or not the precision machining start command M500 exists among the NC programs. Then, if the precision machining start command M500 exists, the process proceeds to S106, and if the command does not exist, the process proceeds to S114.

Then, in the above S106, as shown in Figs. 4 and 5, it is searched whether or not a precision machining end timing command (in this embodiment, the command is denoted by a code "M501" shown in Figs. 4 and 5) exists after the precision machining start command M500 searched in the S104. Then, if the common exists, the period between both the commands M500 and M501 is specified as a precision machining operation period, and the start timing and end timing of the precision machining operation period are recognized.

Further, in S107, it is searched whether or not commands for general operations, which are not directly related to machining and include tool replacement, approach operation, retreat operation, etc. excluding precision machining operation and normal machining operation, exist in other systems from the start timing to the end timing in the precision machining operation period specified in the above S106. Then, on the basis of the search of S107, it is determined in S108 whether or not a general operation command exists. Then, if there is a general operation command, the process proceeds to S109, and if there is no general operation command, the process proceeds to S114.

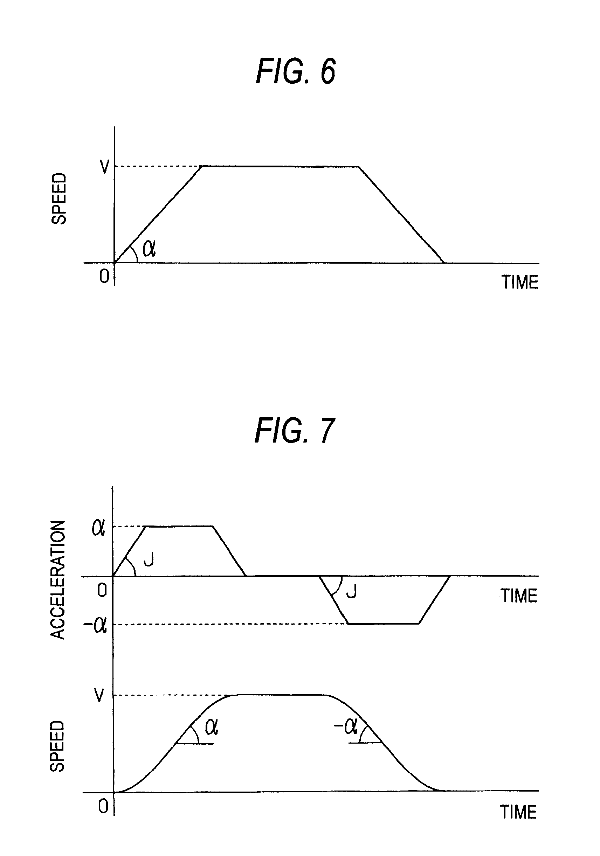

Next, in S109, the speed value of at least one of speed, acceleration, and jerk is lowered and changed in general operation, such as tool replacement, which has been determined in S108 to correspond to the precision machining operation period of the other systems. That is, as shown, for example, in Fig. 6, if the general operation is a linear acceleration-and-deceleration operation having a uniform speed operation portion, the speed value of at least one of speed V and acceleration α is lowered. Further, as shown in Fig. 7, if the general operation is a S-shaped acceleration-and-deceleration operation having a uniform speed operation portion, the speed value of at least one of speed V, acceleration α, and jerk J is made lower than a normal speed value. Here, among speed V, acceleration α, and jerk J, the priority of the lowering change is in the order of jerk J, acceleration α, and speed V. This is because it is effective to lower the speed values in the order of jerk J, acceleration α, and speed V for reduction of vibration or impact.

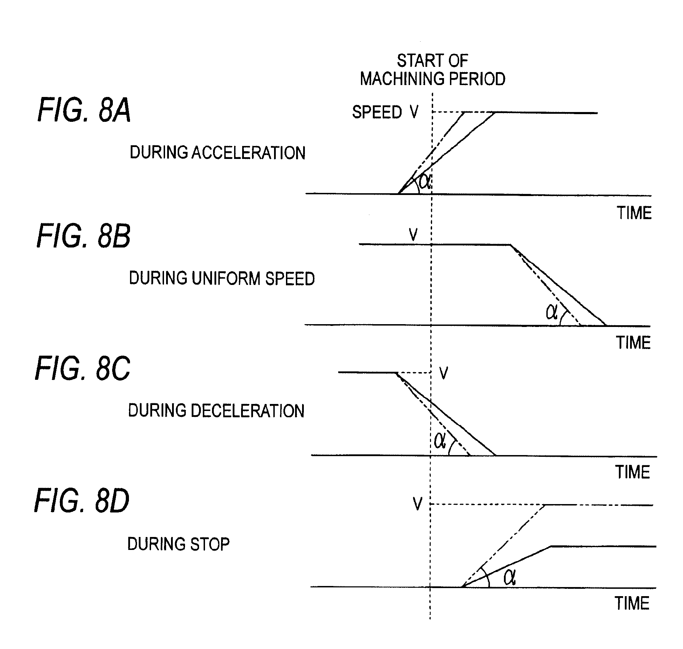

For example, as shown in Figs. 8A to 8C, if the general operation is accelerating at the time of the start of the precision machining operation, at least one of the acceleration and jerk of the acceleration operation is lowered from the start of the acceleration or jerk (a case where acceleration α has been lowered in linear acceleration-and-deceleration operation is illustrated in Fig. 8A). Further, if the general operation is performed at uniform speed at the time of the start of a machining period, the speed is not lowered, but at least one of the acceleration and jerk at the time of deceleration is lowered (a case where acceleration α has been lowered in linear acceleration-and-deceleration operation is illustrated in Fig. 8B). Similarly, if the general operation is decelerating at the time of the start of the precision machining operation, at least one of the acceleration and jerk of the deceleration is lowered from the start of the acceleration or jerk (a case where acceleration α has been lowered in linear acceleration-and-deceleration operation is illustrated in Fig. 8C). By doing in this way, as shown in Figs. 4 and 5, the tool replacement period B, the approach operation period D, and the retreat operation period E corresponding to the precision machining period of other systems in a machining program is extended. Further, if the general machining operation is in a stopped state at the time of the start of the precision machining operation, and the general machining operation is started during the precision machining operation, at least one of the acceleration and jerk of the acceleration operation is lowered from the start thereof (a case where acceleration α and speed have been lowered in linear acceleration-and-deceleration operation is illustrated in Fig. 8D).

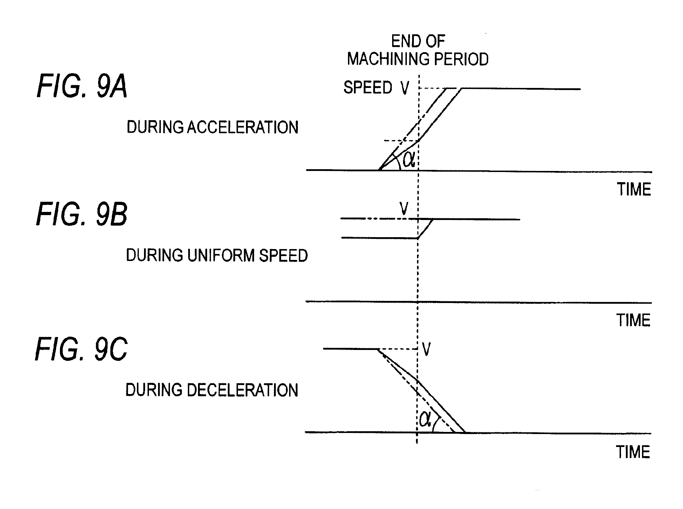

In contrast, as shown in Figs. 9A to 9C, if the general operation is accelerating at the time of the end of the precision machining operation, at least one of the acceleration and jerk is changed immediately after the end of the precision machining operation so that the acceleration operation after the end of the precision machining may become original acceleration or original jerk (a case where acceleration α has been changed in linear acceleration-and-deceleration operation is illustrated in Fig. 9A). Further, if the general operation is performed at uniform speed at the time of the end of the precision machining operation period, at least one of speed, acceleration, and jerk is changed so that acceleration is made at original acceleration or jerk immediately after the end of the precision machining so as to obtain original full speed (a case where acceleration speed V has been changed in linear acceleration-and-deceleration operation is illustrated in Fig. 9B). Similarly, if the general operation is decelerating at the time of the end of the precision machining operation, at least one of the acceleration and jerk of the deceleration operation is changed immediately after the end of the precision machining operation so that the deceleration operation after the end of the precision machining operation period may become original acceleration or jerk (a case where acceleration α has been changed in linear acceleration-and-deceleration operation is illustrated in Fig. 9C).

Then, in S110, the required time of the general operation, such as tool replacement after a change, is calculated. Further, in S111, the delay time in a case where a speed value, such as the acceleration of the general operation, is lowered is calculated by subtracting the required time of the general operation before a change from the required time calculated in the above S110.

In the next S112, as shown in Figs. 4 and 5, according to the length of the delay time, the execution start timing of various operations which exists after the general operation is adjusted using tolerance time. Here, the tolerance time refers to the time for which the axis movement which directly participates in machining has stopped. Specifically, there are main spindle angle indexing time (time required for main spindle indexing), the operation waiting time of an auxiliary device in which the operation waiting time, such as main spindle speed change time (the time of the "speed change waiting"), is set, and queuing waiting time between systems. Then, as clear from, for example, Fig. 5, the approach operation period D or the retreat operation period E overlaps the "speed change waiting" time which is tolerance time by the adjustment of the execution start timing using tolerance time. In this embodiment, the general operation, and the auxiliary device operation are made to overlap each other by setting the execution start timing of the auxiliary device operation in which the time to operation completion is set, on the basis of a general operation starting point, irrespective of the delay of general operation completion timing. Further, even if delay time occurs, the delay time is absorbed by reducing or eliminating the tolerance time (time for which axis movement has stopped for queuing) in queuing between systems. For this reason, in a case where the delay time is shorter than the tolerance time, the delay time may be hidden within the tolerance time and may disappear virtually. Otherwise, in a case where the delay time is longer than the tolerance time, the first queuing between systems after the changed general operation, and the execution start timing of the subsequent operation are adjusted so as to be minimum delay time F (refer to a lower portion of Fig. 5) therebetween, in a state where there is no deviation in the queuing between systems.

Then, in S113, it is determined whether or nor the search of NC data has ended till the end timing of the precision machining period. Then, if the search has ended, the process proceeds to S114, and if the search does not end, the process proceeds to S107. In the next S114, it is determined whether or not the search of machining operation data has ended till the end timing of an NC program. Then, if the search has ended, the changed operation data is stored in the RAM 52 for a PC section as a machining program, i.e., electronic cam data, and is then loaded to the electronic cam data table storage section 49d of the RAM 49 for an NC section, thereby completing the program change operation. On the other hand, if the search of the machining operation data has not ended till the end timing of the NC program, the process proceeds to S104 again.

A machining program as electronic cam data is created as mentioned above. Also, if the machine tool is run by such a machining program, a speed value, such as the acceleration of the general operation, such as tool replacement, in other systems, is lowered in a case where the precision machining operation is executed by the first system or the second system. For this reason, it is possible to suppress that impact or vibration resulting from operations in other systems is transmitted to the system which is executing the precision machining operation, and it is possible to perform precision machining with high precision. Moreover, since deceleration of the acceleration or jerk of the general operation corresponding to the start and end of the precision machining operation is executed from the starting point of the acceleration or jerk, the speed value of the general operation becomes more reliably lower than a speed value in the normal acceleration or jerk at a precision machining starting point. As a result, it is possible to effectively reduce an adverse effect on the precision machining. Moreover, at the time of the end of the precision machining operation, the acceleration or jerk of the general operation shifts to the normal speed value with the end. Thus, any delay of machining time can be suppressed as short as possible.

Further, operations in other systems are not stopped during the precision machining in one system or the start of the precision machining in one system is not delayed until operations in other systems end, but the jerk or acceleration of the general operation time becomes a low speed value, and the general operation time is only slightly extended by the delay of the end. For this reason, as mentioned above, in a case where the delay time is shorter than the tolerance time, delay disappears, and thereby extended time is not revealed, but only in a case where the delay time is longer than the tolerance time, only the longer portion thereof is revealed as the extended time. Accordingly, unlike the conventional technique of the Patent Document 1 in which direct influence caused by any delay to all the operations after the timing with which the delay is caused, machining time does not become long needlessly, and machining efficiency can be improved.

Moreover, in a case where machining, such as other precision machining or normal machining in other systems, is performed when precision machining is executed in one system, the operation speed or the like of the machining is not suppressed, but the machining operation at a designated speed is executed. Also, even if the normal machining operation or the precision machining operation has started or ended in other systems in the middle of the precision machining, typically, changes in vibration or the like caused by the start or end are negligible compared with the general operation, such as tool replacement, and there is almost no influence on machining precision. Therefore, when precision machining and precision machining, or precision machining and normal machining are performed in parallel between different systems, it is possible to prevent the machining precision from falling or to prevent the operation speed from becoming slow.

### (Second Embodiment)

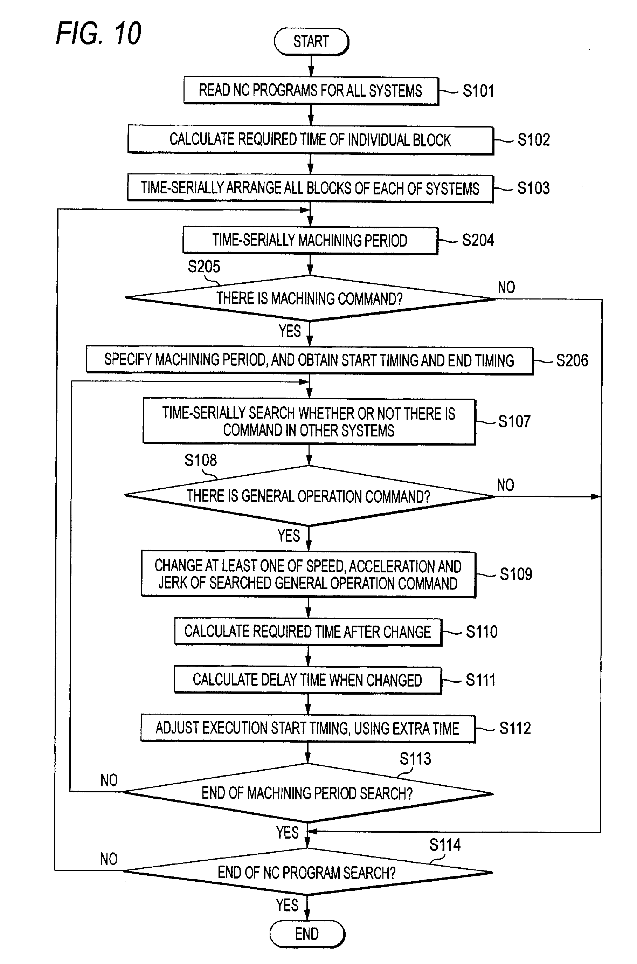

Next, a second embodiment of the invention will be explained around portions which are different from the first embodiment. In the second embodiment, as shown in Fig. 10, in the operation of creating a machining program, the operations of Steps S204 to S206 are mainly different from the operations of Steps S104 to S106 of the aforementioned first embodiment shown in Fig. 3. In addition, although the operations of the other Steps S101 to S103 and S107 to S114 follow the operations of S204 to S206, they are basically the same as the operations of the first embodiment. Therefore, the description of these operations will be omitted herein.

Now, in S204 of the second embodiment, not only precision machining designation, but normal machining commands are also searched time-serially from NC programs arranged time-serially in S103. In the next S205, as a result of the search of S204, it is determined whether or not any precision and normal machining command has existed. Then, if the machining commands have existed, the process proceeds to S206, and if the machining commands do not exist, the process proceeds to S114. Subsequently, in S206, it is searched whether or not other precision or normal machining commands exist even after the machining commands searched in the S204 exist. Then, if any commands exist, the period between both previous and next machining commands is specified as a machining period including the precision machining operation, and the start timing and end timing of the machining period are obtained.

Thereafter, similarly to the first embodiment, during the machining period from the start timing to the end timing, it is searched whether or not the general operation, such as tool replacement, exists in other systems. Then, if the general operation exists in other systems, the speed value of at least one of speed, acceleration, and jerk of the general operation is lowered and changed.

Accordingly, in the second embodiment, even in a normal machining period as well as the precision machining period, the speed value of at least one of speed, acceleration, and jerk of the general operation is lowered and changed. Therefore, high-precision machining can be achieved even in the normal machining.

### (Modifications)

In addition, the above embodiments can also be modified and implemented as follows. - In the above embodiment, a machining program is created from an NC program, and the machining program is adapted such that an adverse effect caused by vibration or impact from other systems is not exerted on precision machining or normal machining. In contrast, at the stage where the central arithmetic unit 45 reads an NC program from the RAM 49 for an NC section, the processing which lowers and changes the speed value of at least one of speed, acceleration, and jerk of the general operation shown in first or second embodiment may be executed simultaneously with the reading. In this case, an NC program may be suitably read in advance to interpret whether or not the precision machining operation exists so that the machine tool may be operated after the aforementioned lowering processing of the speed value is performed on the basis of the interpretation. The following technical idea can be extracted from the above configuration.

- In a machine tool which executes a plurality of programs simultaneously to perform machining, the tool machine includes an analyzing means which analyzes whether or not data which commands precision machining operation exists in the basic programs, and a control means which makes a control so that the speed value of an operation other than the precision machining operation to be executed by other programs during the period of the precision machining operation may become lower than a speed value specified by a program if the data exists.

- When machining is executed on the basis of a machining program, the delay time and the tolerance time of the general operation in actual machining may be measured so that the machining program may be modified and updated on the basis of the measurement result.

### BRIEF DESCRIPTION OF THE DRAWINGS

[Fig. 1] Fig. 1 is a block diagram showing the configuration of an electric circuit in a machine tool of a first embodiment.
[Fig. 2] Fig. 2 is a view showing a system configuration as each mechanism section in the machine tool of Fig. 1.
[Fig. 3] Fig. 3 is a flow chart showing the conversion operation of a program in the machine tool of Fig. 1.
[Fig. 4] Fig. 4 is a time chart illustrating a portion of the conversion operation of the program.
[Fig. 5] Fig. 5 is a time chart illustrating another portion of the conversion operation of the program.
[Fig. 6] Fig. 6 is a diagram showing the speed of linear acceleration-and-deceleration operation in general operation in the program.
[Fig. 7] Fig. 7 is a diagram showing the jerk and speed of S-shaped acceleration-and-deceleration operation in the general operation in the program.
[Figs. 8A, 8B, 8C, and 8D] Figs. 8A, 8B, 8C, and 8D are diagrams showing a method of changing the acceleration and the like of the general operation of a program in which a precision machining operation period does not exist in correspondence with a program in which the precision machining operation period exists.
[Figs. 9A, 9B, and 9C] Figs. 9A, 9B, and 9C are diagrams showing a method of changing the acceleration and the like of the general operation of a program in which a precision machining operation period does not exist in correspondence with a program in which the precision machining operation period exists.
[Fig. 10] Fig. 10 is a flow chart showing the conversion operation of a program in a machine tool of a second embodiment.

### REFERENCE NUMERALS

21: MACHINE TOOL
22: MAIN SPINDLE ROTATING MOTOR
23A: TOOL MOVING MOTOR
23B: TOOL MOVING MOTOR
24: WORKPIECE MOVING MOTOR
25: BACK ATTACHMENT MOVING MOTOR
26: SUB SPINDLE ROTATING MOTOR
27: CONTROL UNIT SECTION WHICH CONSTITUTES ANALYZING MEANS, DETERMINING MEANS, AND CONTROL MEANS
45: CENTRAL ARITHMETIC UNIT
49: RAM FOR NC SECTION
50: ELECTRONIC CAM DATA CREATING BUTTON
51: ROM
52: RAM FOR PC SECTION
A1: MAIN SPINDLE
A2: SUB SPINDLE
TS1, TS2, TS3: TOOL
α: ACCELERATION
J: JERK
M500: COMMAND
M501: COMMAND
V: SPEED

## Claims

1. A tool machine which converts a plurality of basic programs into machining programs, respectively, and simultaneously executes a plurality of machining programs so as to perform machining of a workpiece, the tool machine comprising:
an analyzing means which analyzes whether or not data which commands precision machining operation exists in the basic programs, and
a control means which controls the conversion operation of the machining programs so that the speed value of an operation other than the precision machining operation to be executed by other programs during the period of the precision machining operation may become lower than a normal speed value if the data exists.

2. The tool machine according to Claim 1,
wherein the control means recognizes the start timing and end timing of the precision machining operation period in the basic programs, and determines the timing of the operation other than the precision machining operation for precision machining operation on the basis of the recognition.

3. The machine tool according to Claim 1 or 2,
wherein, at the time of lowering of the speed value of the operation other than the precision machining operation, the control means lowers the value of at least one of speed, acceleration, and jerk of the operation.

4. The machine tool according to any one of Claims 1 to 3,
wherein the analyzing means analyzes whether or not the data which commands the precision machining operation exists in the basic programs before the start of the machining.

5. The machine tool according to any one of Claims 1 to 4, further comprising a determining means which determines whether or not the data of the operation other than the precision machining operation is the data of the machining operation,
wherein the control means controls the lowering of the speed value if the determining means determines not to be machining operation.

6. A program conversion method of a machine tool which converts a plurality of basic programs into machining programs, respectively, the method comprising the steps of:
analyzing whether or not a precision machining operation period exists in each of the basic programs, and
converting the basic program into a machining program so that the speed value of an operation other than the precision machining
operation to be executed in other basic programs during the precision machining operation period may become lower than a normal speed value if the precision machining operation period exists.

7. The program conversion method of a tool machine according to Claim 6, recognizing the start timing and end timing of the precision machining operation period in the basic programs, and determining the timing of the operation other than the precision machining operation for precision machining operation on the basis of the recognition.
